# EUROPÄISCHE PATENTANMELDUNG

(11) **EP 1 902 874 A1**
(43) Veröffentlichungstag der Anmeldung: **26.03.2008**
(21) Anmeldenummer: 07018425.4
(22) Anmeldetag: 19.09.2007
(51) Int. Cl.: B60G 17/015, B60G 17/0165, B60G 17/04, B60G 21/055

(54) **Aktives Fahrwerkssystem**

(30) Priorität: 19.09.2006 DE 102006044627
(71) Anmelder: Ricardo Deutschland GmbH, 73529 Schwäbisch-Gmünd (DE)
(72) Erfinder: Pérez Cuadro, Diógenes, 70825 Korntal-Münchingen (DE)
(74) Vertreter: Schmid, Wolfgang

(57) **Zusammenfassung**

Bei einem aktiven Fahrwerkssystem für ein Kraftfahrzeug, welches wenigstens ein zwischen wenigstens einem Rad (2) und der Karosserie (1) des Kraftfahrzeugs oder zwischen zwei Rädern (2) angeordnetes hydraulisches Stellglied (6), wenigstens eine das wenigstens eine Stellglied mit einer Hydraulikflüssigkeit versorgende Förderpumpe (12) und eine Steuerventileinrichtung (5) zur Steuerung des Drucks innerhalb des Stellglieds aufweist, ist die wenigstens eine Förderpumpe unabhängig von einer Antriebsquelle (17) des Kraftfahrzeugs antreibbar und für einen mit hoher Frequenz intermittierend arbeitenden Förderbetrieb ausgelegt.

## Beschreibung

Die Erfindung betrifft ein aktives Fahrwerkssystem für ein Kraftfahrzeug nach der im Oberbegriff von Anspruch 1 näher definierten Art.

Aus der DE 198 60 233 A1 ist ein gattungsgemäßes aktives Fahrwerkssystem bekannt. Bezüglich des weiteren Standes der Technik bei aktiven Federungen bzw. Aufhängungen für Kraftfahrzeuge wird außerdem auf folgende Schriften verwiesen: DE 102 13 156 A1, EP 0 284 053 B1, DE 42 12 839 A1, EP 0 470 991 B1, EP 0 681 533 B1, EP 0 470 166 B1, DE 103 30 344 A1, DE 38 44 803 C2, EP 0 371 709 B1, EP 0 569 429 B1, DE 41 18 823 A1, DE 43 34 227 A1, DE 41 20 758 A1, DE 36 31 876 A1, DE 41 14 783 A1, DE 38 23 044 A1, DE 195 21 747 A1, DE 42 21 088 A1, EP 0 470 993 B1, EP 0 471 734 B1.

Allgemein sind sogenannte passive Fahrwerkssysteme bekannt, die aus einem Stoßdämpfer mit konstanter Dämpfung und einer Stahlfeder bestehen. Semiaktive Fahrwerkssysteme weisen einen Stoßdämpfer mit einer elektrisch einstellbaren Drossel als Dämpferelement und eine Stahlfeder auf. Bei passiven und semiaktiven Fahrwerkssystemen wird von außen keine Energie zugeführt.

Des weiteren sind sogenannte aktive, hydropneumatische Federungen bekannt, die aus einem Federzylinder als Differentialzylinder, einem Gasdruckspeicher als Federelement, einer konstanten oder elektrisch verstellbare Drossel als Dämpferelement, einem Regelventil und einer Konstantpumpe bestehen. Eine solche aktive hydropneumatische Federung ist auch ohne die Zu- und Abfuhr von Drucköl in der Lage, eine Federung durchzuführen, wobei die Regelventile das Ölvolumen nur zu- oder abführen, wenn das Fahrwerkssystem erkennt, dass es das Fahrzeugverhalten durch einen aktiven Eingriff verbessern kann. Die Anforderungen an das Regelventil können reduziert werden, indem man die Bandbreite, in der das System aktiv wirkt, reduziert.

Des weiteren sind vollaktive, auch als aktive Federung bezeichnete Fahrwerkssysteme bekannt, welche auf den Gasdruckspeicher mit der Konstantdrossel verzichten und stattdessen den Differentialzylinder durch einen Gleichgangzylinder und das langsame Regelventil durch ein schnelles Regelventil ersetzt. Bei diesem Wirkprinzip muss das Regelventil also so ausgelegt sein, dass es auch bei kleinsten Bewegungen des Zylinders Ölvolumina zuführen oder herauslassen kann.

Aktive Fahrwerkssysteme sind demnach Aufhängungssysteme für Kraftfahrzeuge, bei denen die herkömmlichen, bei passiven Fahrwerkssystemen eingesetzten Federungskomponenten, nämlich die Stahlfeder und der Stoßdämpfer, durch ein Stellglied ersetzt werden, um die Lage des Fahrzeugs mit Hilfe von Kommandosignalen eines Mikroprozessors zu korrigieren. Auf diese Weise lassen sich Schwankungen der auf die Fahrzeugkarosserie wirkenden Kräfte minimieren, was zu einer Erhöhung der Sicherheit und des Fahrkomforts für den Fahrer und die Fahrgäste führt. In diesem Zusammenhang sind die Aufgaben eines aktiven Fahrwerks- bzw. Aufhängungs- bzw. Federungssystems neben einer in der Regel langsamen Niveauregulierung unter anderem eine schnelle Nachregelung von Hubbewegungen der Räder, die Vermeidung von Nickbewegungen beim Bremsen und Beschleunigen sowie von Wankbewegungen bei einer Kurvenfahrt, das Ausregeln von dynamischen Kräften, die beim Überfahren von Erhebungen und Vertiefungen sowie bei Seitenwind entstehen, und die Einstellung von Dämpfungseffekten bei der Ein- und Ausfederung. Zusätzlich zu den oben genannten Bauteilen des aktiven Fahrwerkssystems, nämlich der Konstantpumpe, dem Regelventil, dem Hydraulikzylinder als Aktuator sowie einem Steuergerät weist das aktive Fahrwerkssystem außerdem verschiedene Sensoren auf, nämlich mehrere Beschleunigungssensoren zur Messung der Vertikalbeschleunigung des Rads und des Fahrzeugaufbaus bzw. -karosserie sowie der Längs- und Querbeschleunigung der Fahrzeugkarosserie, einen Giermomentsensor zur Messung der Gierrate, also der Drehbeschleunigung der Fahrzeugkarosserie, einen Positions- bzw. Geschwindigkeitssensor zur Messung der Verschiebung oder der Geschwindigkeit des Stellglieds und einen Kraftsensor zur Messung der auf die Karosserie übertragenen Kraft. Weitere Sensoren, wie z.B. Drucksensoren und Geschwindigkeitssensoren, können ebenfalls zum Einsatz kommen.

Ein aktives Fahrwerkssystem ist nicht nur in der Lage, als Reaktion auf vorher gemessene Änderungen der Variablenwerte die Stellglieder zu betätigen, sondern berücksichtigt auch die Lage des Fahrzeugs bezüglich der Art der Fahrzeugbewegung zum Zwecke des Ausgleichs der Wirkung von stationären, statischen oder dynamischen Belastungen und kann darüber hinaus die Stellglieder vorausschauend entsprechend der zu erwartenden Straßenbedingungen betätigen. Hierbei sind verschiedene Kräfte zu berücksichtigen: Stationäre Kräfte, welche die Gegenkräfte darstellen, die im Ruhezustand des Kraftfahrzeugs erforderlich sind, um die Masse sowie gegebenenfalls die Ladung desselben zu tragen. Die statischen Kräfte am bewegten Fahrzeug sind diejenigen, die durch die Werte der Variablen der Fahrzeugbewegung, wie z. B. des Lenkwinkels, der Fahrzeuggeschwindigkeit, -beschleunigung und -verzögerung verursacht werden. Dynamische Kräfte, die auf das Fahrzeug einwirken, ergeben sich aus der Bewegung der Räder, wenn Erhebungen, Vertiefungen und dergleichen in der Straße überfahren werden und wenn das Fahrzeug von Seitenwindböen erfasst wird.

Die prinzipiellen Vorteile eines aktiven Fahrwerkssystems bestehen darin, dass die Fahrwerkseigenschaften des Fahrzeugs kontinuierlich verändert werden können, um wechselnden Straßenverhältnissen und/oder sich ändernden Betriebsbedingungen des Fahrzeugs Rechnung zu tragen. Dadurch können Fahrzeuge mit besseren Sicherheitseigenschaften konstruiert werden, da die Räder einen besseren Kontakt zu der Straße halten können und das Fahrverhalten des Fahrzeugs für den durchschnittlichen Fahrer leichter zu beherrschen ist. Des weiteren können bei einer voll-aktiven Fahrwerksregelung höhere Kräfte und höhere Regelgeschwindigkeiten realisiert werden als bei einer langsam-aktiven Regelung.

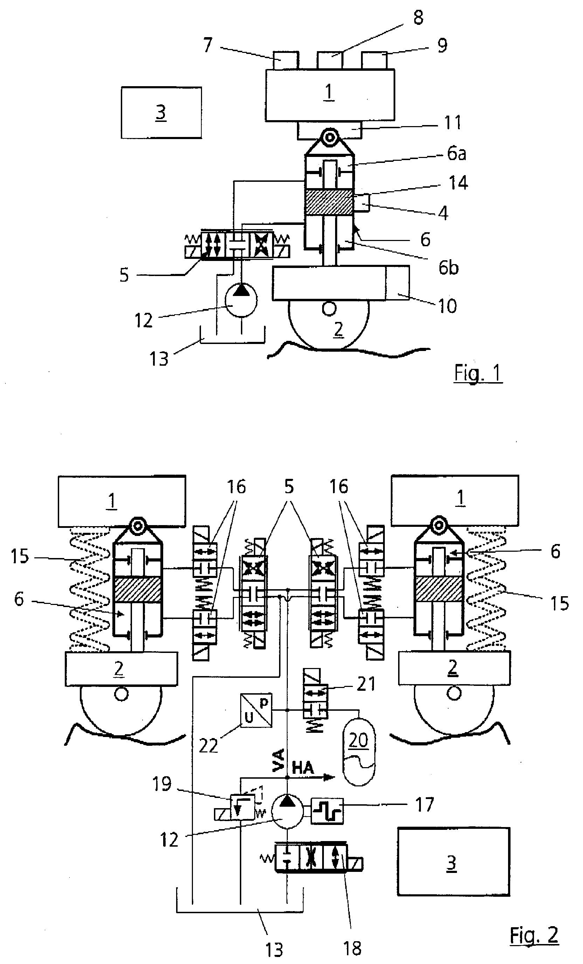

In Fig. 1 ist ein solches, aus dem Stand der Technik bekanntes, aktives Fahrwerkssystem in Form eines so genannten Viertel-Fahrzeug-Modells dargestellt, bei welchem die Karosserie des in seiner Gesamtheit nicht dargestellten Kraftfahrzeugs mit dem Bezugszeichen 1 und eines der Räder desselben mit dem Bezugszeichen 2 bezeichnet ist. Ein elektronisches Steuergerät 3 löst die von ihm empfangenen, zu einem späteren Zeitpunkt näher erläuterten Signale auf und berücksichtigt dabei insbesondere die auf das Fahrzeug einwirkenden Kräfte sowie die resultierenden Verlagerungen des Fahrzeugs insbesondere danach, ob es sich um eine Hub-, eine Nick- oder eine Wankbewegung handelt. Dabei zeigen Veränderungen des von einem mit dem Steuergerät 3 verbundenen Weggeber 4 gemessenen, mittleren Bodenabstands an, dass das Fahrzeug relativ zum Boden eine Hubbewegung in die eine oder andere Richtung ausführt. Zeitliche Änderungen der Differenz der Mittelwerte der Bodenabstände an den Vorder- und Hinterrädern zeigen an, dass die Karosserie 1 relativ zum Boden Nickbewegungen, also Drehbewegungen um die Querachse des Fahrzeugs, in der einen oder anderen Richtung ausführt. Des weiteren zeigen zeitliche Änderungen der Differenz der Mittelwerte der Bodenabstände der Karosserie an den Rädern der rechten und der linken Seite an, dass das Fahrzeug Wankbewegungen, d. h. Drehungen um die Längsachse des Fahrzeugs, in der einen oder der anderen Richtung ausführt.

Über ein Regelventil 5 wird die Zu- und Abfuhr von Hydraulikflüssigkeit in ein als Kolben-ZylinderEinheit ausgebildetes Stellglied 6 gesteuert. Das Regelventil 5 wird durch das mit dem Weggeber 4 verbundene Steuergerät 3 betätigt. Dabei erzeugt der Weggeber 4 Signale, die die jeweilige Hubstellung der Räder 2 relativ zu der Karosserie 1 wiedergeben. Zusätzlich zu dem Weggeber 4 sind auch Beschleunigungsgeber 7, 8, 9 und 10 zur Messung der Beschleunigung der Karosserie 1 und der Räder 2 sowie ein Kraftgeber 11 zum Messen der auf die Karosserie 1 wirkenden Kraft vorgesehen. Durch entsprechende Steuerung des Regelventils 5, d. h. durch die Verbindung einer der Kammern 6a oder 6b des Stellglieds 6 mit einer als Förderpumpe 12 ausgebildeten Druckquelle und der anderen Kammer 6b oder 6a mit einem Tank 13 kann der Druck in den beiden Kammern 6a, 6b des Stellglieds 6 so variiert werden, dass sich eine resultierende Kraft auf einen Kolben 14 des Stellglieds 6 ergibt. Über das Regelventil 5 kann das Stellglied 6 gegenüber der Förderpumpe 12 und dem Tank 13 abschließbar sein.

In bestimmten Situationen kann auch vorgesehen sein, den Hubbewegungen der Räder 2 einen Dämpfungswiderstand entgegenzusetzen, welcher durch Drosselung des Regelventils 5 während des Ein- bzw. Ausfederungshubs erzeugt wird. Das Regelventil 5 kann also auf eine solche Art und Weise angesteuert werden, dass der Zufluss von Druckmittel in eine der Kammern des Stellglieds 6 aus der Förderpumpe 12 dosiert wird, während der Abfluss der Hydraulikflüssigkeit aus der anderen Kammer zu dem Tank 13 dosiert wird. Durch diese Dosierung der Strömung der Hydraulikflüssigkeit in oder aus den Kammern des Stellglieds 6 kann die Geschwindigkeit des Kolbens 14 gesteuert werden.

In Fig. 2 ist eine detailliertere Ausgestaltung eines aus dem Stand der Technik bekannten aktiven Fahrwerkssystems bekannt. Hierbei ist zusätzlich zu dem Stellglied 6 jeweils ein Federelement 15 zum Tragen der statischen Fahrzeuglast vorgesehen, wodurch die Dimensionierung der Druckversorgung, also im wesentlichen diejenige der Förderpumpe 12, reduziert werden kann. Des weiteren dient das Federelement 15 auch als Sicherheitsbauteil, welches bei einem Ausfall der hydraulische Steuerung oder des elektronischen Steuergeräts 3 die statische Last des Fahrzeugs aufnimmt. Die hydraulische Steuerung für das Fahrwerkssystem besteht aus einem jedem der Räder 2 zugeordneten Regelventile 5 und mehreren Absperrventilen 16 je Fahrzeugachse in einer Ausführungsform als Sitzventil. Auf diese Weise wird vermieden, dass sich bei stehendem Fahrzeug die eingestellte Höhenlage desselben aufgrund von Leckstellen des als Schieberventil ausgebildeten Regelventils 5 ändert.

Die Druckversorgung weist die im Regelfall durch eine als Antriebsquelle für das Kraftfahrzeug dienende Brennkraftmaschine 17 angetriebene Förderpumpe 12, ein stufenlos steuerbares Drosselventil 18, welches zur Saugregelung der Förderpumpe 12 zwischen derselben und dem Tank 13 angeschlossen ist und eine Einstellung des von der Förderpumpe 12 angesaugten Volumenstroms ermöglicht, was zu einer Reduzierung des Energieverbrauchs führt, sowie ein Druckregelventil 19 zur drosselfreien Verbindung zwischen der Druckseite der Förderpumpe 12 und dem Tank 13 auf. Dadurch lässt sich der zum Betrieb der Förderpumpe 12 notwendige Energiebedarf im Stillstand erheblich vermindern, da durch das Öffnen des Druckregelventils 19 die Förderpumpe 12 im Umlauf arbeitet, d. h. das von der Förderpumpe 12 geförderte Hydraulikmedium direkt zu dem Tank 13 zurückgeleitet wird.

Das bekannte Fahrwerkssystem weist des weiteren ein Druckspeichersystem, bestehend aus einem Druckspeicher 20, einem Absperrventil 21 und einem Drucksensor 22 auf, welches bei hohem Leistungsbedarf in der Lage ist, Energie abzugeben. Da solch hohe Spitzenleistungen meist nur kurzzeitig benötigt werden, kann bei entsprechender Auslegung des Druckspeichers 20 gewährleistet werden, dass die Förderpumpe 12 nur eine vergleichsweise geringe maximale Förderleistung aufweisen muss. In extremen Fahrzuständen erfasst der Drucksensor 22 Druckschwankungen in der Leitung zwischen der Förderpumpe 12 und dem Regelventil 5, die ein Signal dafür sind, dass ein deutlich erhöhter Druck benötigt wird. In diesem Fall muss dem Stellglied 6 sehr viel mehr Hydraulikflüssigkeit zugeführt werden, weshalb das auch hier vorgesehene Steuergerät 3 zumindest eines der Regelventile 5 in eine Stellung bringt, in der die Druckseite der Förderpumpe 12 mit einer der beiden Kammern 6a oder 6b des Stellglieds 6 mit einem relativ geringen Drosselwiderstand verbunden ist. Des weiteren wird das Absperrventil 21 des Druckspeichers 20 geöffnet und die Förderpumpe 12 wird durch die vollständige Öffnung des Drosselventils 18 auf die maximale Förderleistung gebracht, so dass an der Druckeingangsleitung der Regelventile 5 das entsprechend hohe Druckniveau zur Verfügung steht.

Nachteilig bei diesem bekannten Federungs- bzw. Fahrwerkssystem ist jedoch die eine sehr hohe Anzahl an Bauelementen aufweisende Hydraulikanlage sowie die Tatsache, dass die Regelventile 5 hochdynamisch ausgelegt werden müssen und daher sehr teuer bzw. teilweise gar nicht realisierbar sind. Des weiteren erfordern die bekannten Systeme einen sehr hohen Energiebedarf, da aufgrund der notwendigen Dynamik des Systems die Förderpumpe 12 zu jeder Zeit eine minimal erforderliche Hydraulikenergie, die darüber hinaus auch von der Drehzahl der Brennkraftmaschine abhängig ist, zur Verfügung stellen muss. Insbesondere bei maximaler Drehzahl der Brennkraftmaschine und maximaler Anregung durch die Straße ergibt sich darüber hinaus eine sehr schlechte Regelbarkeit des Systems.

Es ist daher Aufgabe der vorliegenden Erfindung, ein aktives Fahrwerkssystem für ein Kraftfahrzeug zu schaffen, welches in der Lage ist, die Eigenschaften des Fahrwerks kontinuierlich und in hohem Maße dynamisch zu verändern, um die Karosserie des Kraftfahrzeugs sich wechselnden Straßenverhältnissen und/oder Betriebsbedingungen des Kraftfahrzeugs anzupassen, so dass ein optimaler Kompromiss zwischen Fahrsicherheit und Fahrkomfort erreicht wird. Des weiteren soll das erfindungsgemäße Fahrwerkssystem ein möglichst geringes Gewicht und einen geringen Energieverbrauch aufweisen und dabei möglichst geringe Kosten erzeugen.

Erfindungsgemäß wird diese Aufgabe durch die in Anspruch 1 genannten Merkmale gelöst.

Durch die erfindungsgemäße Ausführung der Förderpumpe mit einem mit hoher Frequenz intermittierend arbeitenden, von einer Antriebsquelle des Kraftfahrzeugs unabhängigen Förderbetrieb ergibt sich eine vollvariable, hochdynamische Ansteuerung des Stellglieds durch die Förderpumpe, so dass ein sehr schnelles Schalten des Stellglieds möglich ist. Auf diese Weise ist es zum einen möglich, die Fahrwerkseigenschaften des mit dem erfindungsgemäßen aktiven Fahrwerkssystem ausgestatteten Kraftfahrzeugs optimal an wechselnde Straßenverhältnisse anzupassen, wodurch ein sehr guter Kompromiss zwischen Fahrsicherheit und Fahrkomfort erreicht wird, und es lassen sich zum anderen die Kosten des Fahrwerkssystems minimieren, da teure Systemkomponenten, wie z. B. Hochdruckspeicher oder Servoventile, vermieden werden.

Ein weiterer erheblicher Vorteil der erfindungsgemäßen Lösung besteht darin, dass die Förderpumpe vollvariabel und nur nach Bedarf betrieben werden kann, wodurch gegenüber bekannten Lösungen der Energieverbrauch erheblich reduziert wird. Außerdem wir eine Überdimensionierung der Förderpumpe vermieden, da dieselbe unabhängig von der Drehzahl arbeitet und somit auch bei geringen Motordrehzahlen ein ausreichendes Fördervolumen zur Verfügung stellt.

Die erfindungsgemäße Ausführung der Förderpumpe weist gegenüber bekannten Lösungen den weiteren Vorteil auf, dass sie eine verhältnismäßig geringe Baugröße besitzt und sehr flexibel angebracht werden kann, da sie autark betrieben wird und daher nicht an einem bestimmten Ort eingebaut werden muss. Auf diese Weise lassen sich, zusätzlich zu der oben erläuterten Energieeinsparung, die Kosten noch weiter verringern.

Als besonders gut geeignet zum Erzielen des mit hoher Frequenz intermittierend arbeitenden Förderbetriebs hat es sich erwiesen, wenn die Förderpumpe mit piezoelektrischen, magnetostriktiven und/oder elektrochemischen Aktuatoren als Förderelementen ausgebildet ist.

Eine sehr einfache und unkomplizierte Ansteuerung eines jeden Stellglieds ergibt sich, wenn für jedes Stellglied wenigstens eine Förderpumpe vorgesehen ist. Auf diese Weise kann des weiteren eine Vielzahl von ansonsten notwendigen Hydraulikleitungen eingespart werden. Selbstverständlich lassen sich jedoch auch mehrere Stellglieder mit ein und derselben Förderpumpe ansteuern.

In diesem Zusammenhang bietet es sich an, wenn die wenigstens eine Förderpumpe und die wenigstens eine hydraulische Steuerventileinrichtung modulartig mit dem Rad verbunden sind. Eine solche modulartige Einheit lässt sich auf sehr einfache Weise in einer entsprechenden Baugruppe mit dem Rad bzw. einer Aufnahme für das Rad vormontieren.

Des weiteren kann vorgesehen sein, dass das Stellglied als hydraulische Zylinder-Kolben-Einheit mit wenigstens einem Zylinder und wenigstens einem Kolben ausgebildet ist. Eine solche Ausführung des Stellglieds hat sich als sehr vorteilhaft zur Anbindung des Rads an der Karosserie erwiesen.

Hierbei kann die Zylinder-Kolben-Einheit als Gleichgangzylinder, doppelt wirkender Differentialzylinder, einfach wirkende Zylinder-Kolben-Einheit oder Drehzylinder ausgebildet ist ausgebildet sein.

Um eine von vorhandenen Fahrwerksystemen unabhängige Wankstabilisierung zu erreichen, kann in einer weiteren vorteilhaften Ausgestaltung der Erfindung vorgesehen sein, dass das Stellglied in einen Stabilisator integriert ist. Dadurch lässt sich auch bei passiven Radaufhängungen eine sehr kostengünstige, aktive Fahrwerkregelung erzielen.

Weitere vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig beschrieben.

Es zeigt:
- Fig. 1: ein Fahrwerkssystem nach dem Stand der Technik;
- Fig. 2: eine detailliertere Darstellung eines Fahrwerkssystems nach dem Stand der Technik;
- Fig. 3: eine vereinfachte Darstellung eines erfindungsgemäßen aktiven Fahrwerkssystems;
- Fig. 4: eine erste Ausführungsform des erfindungsgemä-ßen aktiven Fahrwerkssystems;
- Fig. 5: eine zweite Ausführungsform des erfindungsgemäßen aktiven Fahrwerkssystems;
- Fig. 6: eine weitere Ausführungsform des erfindungsgemäßen aktiven Fahrwerkssystems;
- Fig. 7: eine weitere Ausführungsform des erfindungsgemäßen aktiven Fahrwerkssystems;
- Fig. 8: eine weitere Ausführungsform des erfindungsgemäßen aktiven Fahrwerkssystems;
- Fig. 9: eine weitere Ausführungsform des erfindungsgemäßen aktiven Fahrwerkssystems;
- Fig. 10: eine weitere Ausführungsform des erfindungsgemäßen aktiven Fahrwerkssystems;
- Fig. 11: eine weitere Ausführungsform des erfindungsgemäßen aktiven Fahrwerkssystems;
- Fig. 12: eine weitere Ausführungsform des erfindungsgemäßen aktiven Fahrwerkssystems;
- Fig. 13: eine weitere Ausführungsform des erfindungsgemäßen aktiven Fahrwerkssystems;
- Fig. 14: eine weitere Ausführungsform des erfindungsgemäßen aktiven Fahrwerkssystems;
- Fig. 15: eine weitere Ausführungsform des erfindungsgemäßen aktiven Fahrwerkssystems;
- Fig. 16: eine weitere Ausführungsform des erfindungsgemäßen aktiven Fahrwerkssystems;

- Fig. 17: eine weitere Ausführungsform des erfindungsgemäßen aktiven Fahrwerkssystems;
- Fig. 18: eine weitere Ausführungsform des erfindungsgemäßen aktiven Fahrwerkssystems;
- Fig. 19: eine weitere Ausführungsform des erfindungsgemäßen aktiven Fahrwerkssystems; und
- Fig. 20: ein Diagramm mit verschiedenen Kraft-Geschwindigkeits-Kennlinien unterschiedlicher Fahrwerkssysteme.

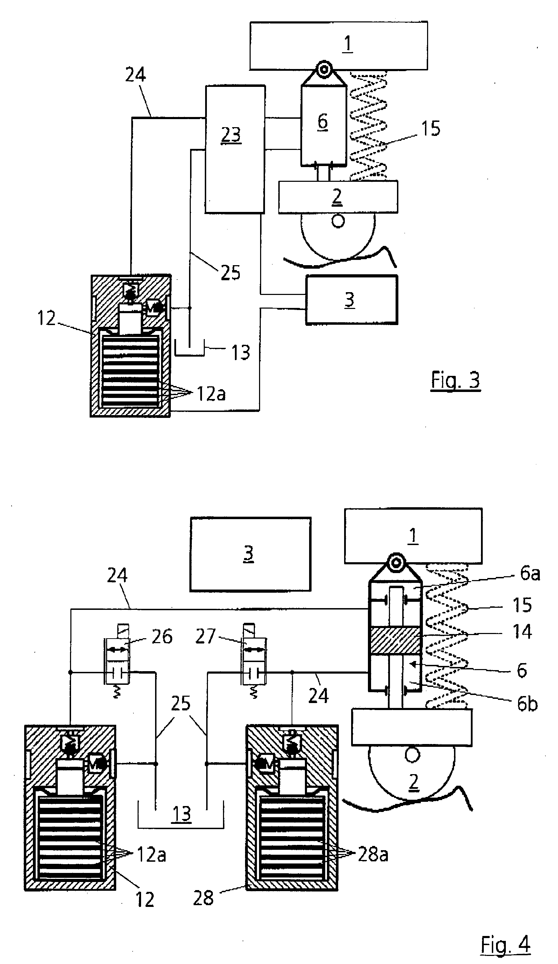

Bauteile, die bereits bei den beiden zum Stand der Technik gehörenden Fahrwerkssystemen gemäß der Figuren 1 und 2 vorhanden waren, sind in den nachfolgenden Figuren 3 - 11 mit denselben Bezugszeichen bezeichnet.

Fig. 3 zeigt ein erfindungsgemäßes aktives Fahrwerks- bzw. Aufhängungssystem zum Federn, Dämpfen und/oder Regeln der Relativbewegungen zwischen der Fahrzeugkarosserie 1 und dem Rad 2. Dabei ist zwischen der Fahrzeugkarosserie 1 und dem Rad 2 ein Stellglied 6 angeordnet, welches über eine hydraulische Steuerventileinrichtung 23 mit der Förderpumpe 12 verbunden ist. Von dem Ausgang der Förderpumpe 12 führt eine Versorgungsleitung 24 zu der hydraulischen Steuerventileinrichtung 23 und von dort zu einer oder zwei erst in Fig. 4 dargestellten Kammern 6a und 6b des Stellglieds 6. Mittels einer Rücklaufleitung 25 wird die Hydraulikflüssigkeit zu dem Tank 13 zurück geführt.

Bei sämtlichen der nachfolgend beschriebenen Ausführungsformen des Fahrwerkssystems ist die Förderpumpe 12 unabhängig von der Antriebsquelle des Kraftfahrzeugs antreibbar und für einen mit hoher Frequenz intermittierend arbeitenden Förderbetrieb ausgelegt. Unter dem Begriff "hohe Frequenz" werden hierin Frequenzen ab 500 Hz angesehen. Insbesondere weist die Förderpumpe 12 im vorliegenden Fall piezoelektrische Aktuatoren 12a als Förderelemente auf. Durch diese Ausführung der auch als Piezopumpe bezeichneten Förderpumpe 12 ist eine vollvariable, hochdynamische Ansteuerung des Stellglieds 6 gegeben, so dass ein sehr schnelles Schalten des Stellglieds 6 möglich ist, wodurch ein sehr guter Kompromiss zwischen Fahrsicherheit und Fahrkomfort erreicht wird, die Kosten und das Gewicht des Fahrwerkssystems verringert werden und der Energieverbrauch desselben reduziert wird. Des weiteren ist bei sämtlichen der nachfolgend beschriebenen Ausführungsformen für jedes Rad 2 des Kraftfahrzeugs wenigstens eine Förderpumpe 12 vorgesehen, theoretisch wäre es jedoch auch möglich, für sämtliche oder mehrere Räder 2 des Kraftfahrzeugs ein und dieselbe Förderpumpe 12 zu verwenden, was jedoch mit einem nicht unerheblichen Leitungs- und Schaltungsaufwand verbunden wäre. Zusätzlich zu dem Stellglied 6 kann zwischen der Fahrzeugkarosserie 1 und dem Rad 2 in an sich bekannter Weise auch das Federelement 15 vorgesehen sein, welches zumindest die statische Fahrzeuglast trägt und darüber hinaus eine zusätzliche Sicherheit im Falle des Versagens des elektrischen Steuergeräts 3 oder der hydraulischen Steuerventileinrichtung 23 darstellt. Gegebenenfalls könnte auf das Federelement 15 auch vollständig verzichtet werden.

Fig. 4 zeigt eine konkretere Ausführungsform des erfindungsgemäßen Fahrwerkssystems. Hierbei weist die hydraulische Steuerventileinrichtung 23 zwei als 2/2-wegeventile ausgebildete elektrische Schalt- bzw. Steuerventile 26 und 27 auf, die zur Steuerung des von der ersten Förderpumpe 12 und einer in diesem Fall vorgesehenen zweiten Förderpumpe 28 erzeugten Hydraulikdrucks dienen. Die zweite Förderpumpe 28 weist im vorliegenden Fall ebenfalls piezoelektrische Aktuatoren 28a als Förderelemente auf. Darüber hinaus können die Steuerventile 26 und 27 auch als Druckregelventile ausgebildet sein und den Druck der Kammern 6a und 6b so ansteuern, dass ein gezielter Druckverlauf beim Ein- oder Ausfedern stattfindet. Das mit der Hydraulikflüssigkeit bzw. dem Hydraulikdruck versorgte Stellglied 6 ist dabei als hydraulische GleichgangZylinder-Kolben-Einheit ausgebildet und weist die beiden oben genannten Kammern 6a und 6b auf. Dabei ist die erste Förderpumpe 12 mit der oberen Kammer 6a und die zweite Förderpumpe 28 mit der unteren Kammer 6b des Stellglieds 6 verbunden. Das Steuerventil 26 steuert die Zu- oder Abfuhr zu der oberen Kammer 6a und das Steuerventil 27 steuert die Zu- oder Abfuhr zu der unteren Kammer 6b des Stellglieds 6. Somit sind dem Rad 2 also insgesamt zwei Förderpumpen 12 und 28 zugeordnet.

Die beiden Steuerventile 26 und 27 werden in Zusammenarbeit mit der zugehörigen Förderpumpe 12 bzw. 28 von dem auch hier vorgesehenen elektronischen Steuergerät 3 betätigt. Alternativ zu der Ausführung der Steuerventile 26 und 27 als 2/2-Wegeventile können dieselben auch als Druckbegrenzungs- bzw. Druckregelventile ausgebildet sein. Des weiteren können die Steuerventile 26 und 27 elektromagnetisch, piezoelektrisch sowie magneto- oder elektrorheologisch angesteuert werden und sind gegebenenfalls auch durch konstante Blenden bzw. Drosselstellen ersetzbar. Die Steuerventile 26 und 27 können als normale Schaltventile eine integrierte Drossel als Dämpferelement aufweisen oder als Regelventile eine elektrisch verstellbare Dämpfungsfunktion erzeugen. Von den beiden Förderpumpen 12 und 28 führt jeweils eine Versorgungsleitung 24 zu der Kammer 6a bzw. 6b des Stellglieds 6. Die beiden Steuerventile 26 und 27 sind in jeweiligen von den Versorgungsleitungen 24 abzweigenden Rücklaufleitungen 25 angeordnet.

In ähnlicher Weise wie bei den beiden unter Bezugnahme auf die Figuren 1 und 2 beschriebenen Fahrwerkssystemen kann auch hier zur Überwachung des Abstands zwischen der Karosserie 1 und dem jeweiligen Rad 2 ein bei dieser Ausführungsform nicht dargestellter Weggeber vorgesehen sein, der beispielsweise den Hub des Kolbens 14 des Stellglieds 6 wiedergeben kann.

Das hierin beschriebene aktive Fahrwerkssystem dient unter anderem dazu, einen konstanten Abstand der Karosserie 1 zu dem Boden bzw. der Straße aufrecht zu erhalten, so dass beim Bremsen oder Beschleunigen des Fahrzeugs entstehende Nickbewegungen an den vorderen und/oder hinteren Rädern unterdrückt werden sollten. Dies geschieht dadurch, dass die erste Förderpumpe 12 und, falls vorhanden, die zweite Förderpumpe 28 Hydraulikflüssigkeit zu den Kammern 6a oder 6b zuführen oder dass mittels der Steuerventile 26 und 27 Hydraulikflüssigkeit aus den Kammern 6a und 6b abgelassen wird. Hierzu sind die Steuerventile 26 und 27 so angeordnet, dass sie ein Abströmen der Hydraulikflüssigkeit zu dem Tank 13 erlauben. Der Tank 13 kann bei allen Ausführungsformen unter Druck stehen, um das Saug- und/oder Förderverhalten der Förderpumpen 12 und/oder 28 zu verbessern.

Um die Nickbewegungen der Karosserie 1 zu überwachen, können ähnliche Sensoren wie bei den Figuren 1 und 2 eingesetzt werden, nämlich Positionssensoren zur Messung der Verschiebung des Stellglieds 6, Beschleunigungssensoren zur Messung der Dreh- und Längsbeschleunigungen der Karosserie 1 und der Vertikalbeschleunigungen der Räder 2 sowie Kraftsensoren zur Messung der auf die Karosserie 1 übertragenen Kraft. Statt Kraftkönnen auch Drucksensoren zum Einsatz kommen.

Die Nickbewegung bzw. Nickneigung der Karosserie 1 wird im allgemeinen dadurch unterdrückt, dass die vorderen bzw. die hinteren Radaufhängungen steifer oder härter eingestellt werden, wohingegen die jeweils anderen Aufhängungen, also die Aufhängungen der Hinterachse bzw. der Vorderachse, weicher eingestellt werden. Der Ausgleich von Wankbewegungen bei Kurvenfahrten wird analog zu dem Ausgleich der Nickbewegungen durchgeführt, wobei selbstverständlich Ein- und Ausfederungsbewegungen zwischen den linken und den rechten Rädern des Kraftfahrzeugs ausgeglichen werden.

Zusätzlich zu dem Konstanthalten der stationären Krafteinwirkung auf die Karosserie 1 sollte das aktive Fahrwerkssystem auch in der Lage sein, durch die Straße verursachte dynamische Kräfte auf die Karosserie 1 auszuregeln. Solche Kräfte entstehen, wenn das Kraftfahrzeug Erhebungen oder Vertiefungen in der Straße überfährt. Ein angemessenes Dämpfungsverhältnis des Fahrwerkssystems ist wünschenswert, da eine erhebliche Reduzierung der auf die Karosserie 1 übertragenen, dynamischen Kräfte eine Nulldämpfung für das Fahrwerkssystem und dadurch ein unerwünschtes Fahrverhalten zur Folge hätte. Daher stellt das Fahrwerkssystem während des Ein- bzw. Ausfederungshubs einen Dämpfungswiderstand ein, der durch eine geregelte Arbeitsweise der Förderpumpen 12 und 28 und/oder durch eine entsprechende Drosselung der Steuerventile 26 und 27 auf eine solche Art und Weise erzeugt wird, dass es möglich ist, die Bewegungsgeschwindigkeit des Kolbens 14 des Stellglieds 6 gezielt zu steuern. In diesem Zusammenhang ist eine geregelte Arbeitsweise der Förderpumpen 12 und 28 durch Regeln der an die Piezoelemente der Förderpumpen 12 bzw. 28 angelegten Spannung und/oder durch Regelung der Arbeitsfrequenz der Förderpumpen 12 und 28 möglich.

Beim Einfedern des Fahrwerkssystems verschiebt sich der Kolben 14 des Stellglieds 6 nach oben, so dass sich der Druck in der oberen Kammer 6a erhöht. Um zu vermeiden, dass die von dem Stellglied 6 zugeführte Einfederungsenergie auf die Karosserie 1 übertragen wird, wird der Druck in der oberen Kammer 6a durch eine entsprechende Ansteuerung des Steuerventils 26 verringert. Durch eine steuerbare Drosselung der Verbindung zwischen der Kammer 6a und dem Tank 13 innerhalb des Steuerventils 26 oder wenn das Steuerventil 26 beispielsweise als Schaltventil mit konstanter Drosselung ausgebildet ist, kann durch gezielte Zufuhr von Hydraulikflüssigkeit in die Kammer 6a mittels der Förderpumpe 12 ein übermäßiges Einfedern der Räder 2 verhindert werden, falls dies aus Sicherheitsgründen erforderlich ist. Während einer solchen Einfederungsbewegung kann durch das Öffnen des Steuerventils 27 ein Vakuum in der unteren Kammer 6b vermieden werden, so dass sich eine Verbindung zwischen der unteren Kammer 6b und dem Tank 13 ergibt, was zu einer gezielten Befüllung der unteren Kammer 6b führt. Bei sehr schnellen Einfederungsbewegungen ist eine gezielte Befüllung der Kammer 6b auch durch die Zufuhr von Hydraulikflüssigkeit in die untere Kammer 6b mittels der zweiten Förderpumpe 28 denkbar.

Beim Ausfedern des Fahrwerkssystems verschiebt sich der Kolben 14 des Stellglieds 6 bei geöffnetem Steuerventil 27 nach unten, was zu einer Verringerung des Drucks der Hydraulikflüssigkeit in der oberen Kammer 6a führt. Auch hier kann zur Vermeidung der Übertragung der von dem Stellglied 6 ausgelösten Ausfederungsenergie auf die Karosserie 1 der Druck der Hydraulikflüssigkeit in der oberen Kammer 6a durch eine entsprechende Ansteuerung der Förderpumpe 12 bei geschlossenem Steuerventil 26 erhöht werden. Analog zu der Vorgehensweise bei übermäßigen Einfederhüben kann, falls dies beispielsweise aus Sicherheitsgründen erforderlich ist, durch eine steuerbare Drosselung der Verbindung zwischen der unteren Kammer 6b und dem Tank 13 innerhalb des Steuerventils 27, oder bei einfacherer Ausführung des Steuerventils 27, beispielsweise als Schaltventil mit konstanter Drosselung, durch eine gezielte Zufuhr von Hydraulikflüssigkeit in die untere Kammer 6b durch die Förderpumpe 28 übermäßigen Ausfederhüben entgegengewirkt werden. Darüber hinaus ist auch eine gezielte Arbeitsweise der Förderpumpe 12 denkbar, um den Einsatz der Förderpumpe 28 zu umgehen.

Entgegen der dargestellten Ausführungsform können die Stellglieder 6 auch so ausgebildet sein, dass jeweils der Kolben 14 mit der Karosserie 1 und nicht mit dem Rad 2 verbunden ist. Das Ablassen und Erhöhen von Druck der Hydraulikflüssigkeit in den beiden Kammern 6a und 6b wird dann entsprechend angepasst. Des weiteren können die Stellglieder 6 auch horizontal zwischen der Karosserie 1 und den Rädern 2 eingebaut sein. Vorzugsweise sind die Förderpumpen 12 und 28 zusammen mit den Steuerventilen 26 und 27 bzw. Der hydraulischen Steuerventileinrichtung 23 als Modul ausgeführt und in das Fahrwerkssystem bzw. direkt in das Rad 2 integriert.

Die Steuerventile 26 und 27 sind vorzugsweise als Sitzventile ausgebildet, besitzen dadurch keine Steuerkanten und weisen eine sehr gute Dynamik auf. Des weiteren können Sitzventile sehr schnell geschaltet werden, so dass die Bandbreite der aktiven Regelung vergrößert wird. Die Steuerventile 26 und 27 können außerdem eine einfache Konstruktion aufweisen, da sie als Schalt- und nicht als Regelventile ausgeführt sein können.

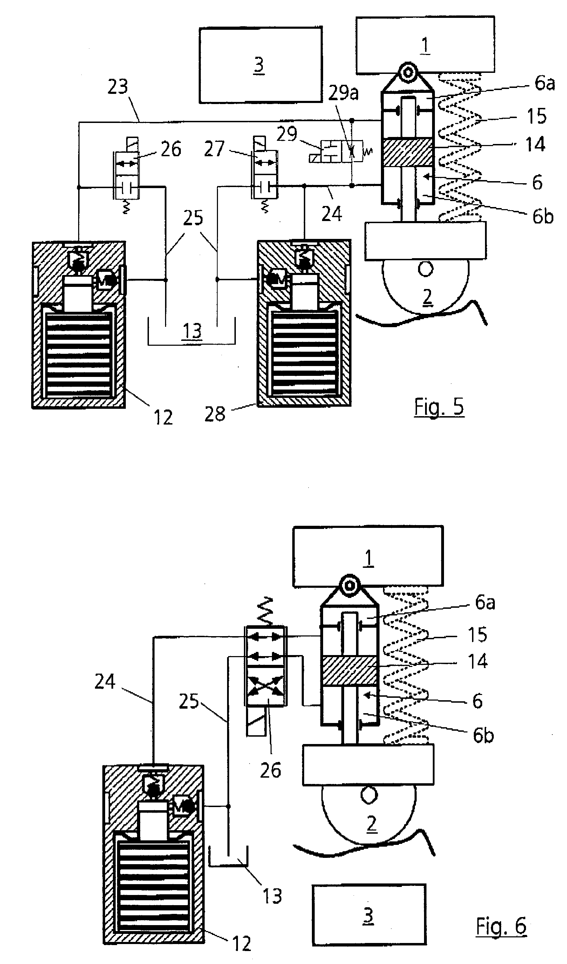

In Fig. 5 ist, im Gegensatz zu der Ausführungsform gemäß Fig. 4, ein Sicherheitsventil 29 mit einer Drossel 29a vorgesehen, welches so geschaltet ist, dass hierdurch die beiden Kammern 6a und 6b des Stellglieds 6 miteinander verbunden werden können. Dadurch entsteht beim Ausfall des elektrischen Systems ein passives Fahrwerkssystem, welches ein Betreiben des Kraftfahrzeugs mit einer konstanten Dämpfung erlaubt. Alternativ zu der Integration in das Sicherheitsventil 29 kann die Drossel 29a auch als Konstantdrossel ausgebildet sein.

Fig. 6 zeigt eine Ausführungsform des Fahrwerkssystems, bei der zur Regelung des Drucks in den Kammern 6a und 6b des auch in diesem Fall als GleichgangZylinder-Kolben-Einheit ausgebildeten Stellglieds 6 nur eine Förderpumpe, nämlich die Förderpumpe 12 verwendet wird. Die hydraulische Steuerventileinrichtung 23 weist in diesem Fall lediglich das Steuerventil 26 auf, welches als 4/2-Wegeventil ausgebildet ist und gewährleistet, dass eine der Kammern 6a und 6b mit der Förderpumpe 12 und die andere Kammer 6b bzw. 6a mit dem Tank 13 verbunden ist. Das als 4/2-Wegeventil ausgebildete Steuerventil 26 kann eine integrierte Dämpfungsfunktion durch die Realisierung einer elektrischen Drosseleinstellung aufweisen. Wenn das Steuerventil 26 entgegen der Darstellung als 4/3-Wegeventil ausgebildet ist, kann es auch eine hier nicht dargestellte integrierte Sicherheitsfunktion für einen eventuellen Systemausfall aufweisen und damit die Funktion des Sicherheitsventils 29 mit der Drossel 29a gemäß Fig. 5 integrieren. Darüber hinaus sind auch andere Sicherheitsmaßnahmen denkbar, wie zum Beispiel das Einbringen weiterer Sperrventile zwischen dem Steuerventil 26 und dem Stellglied 6 möglich.

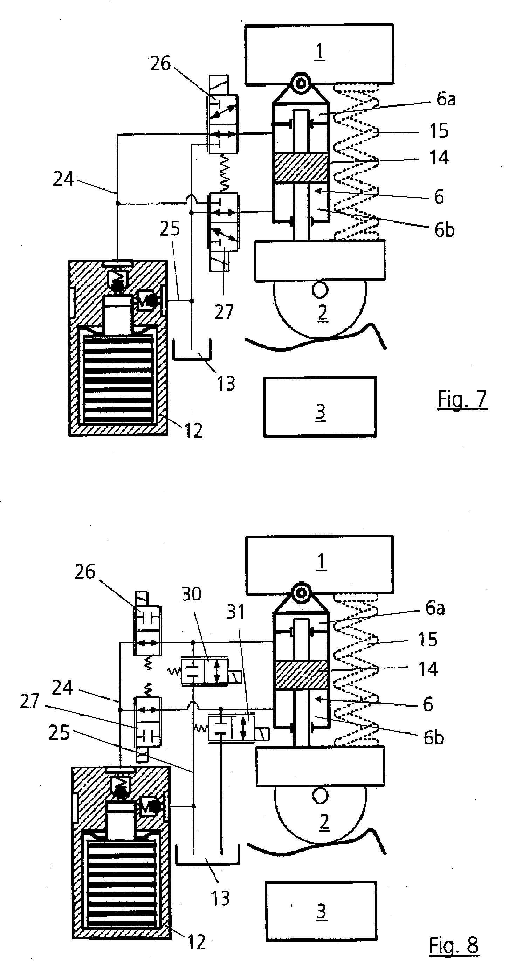

Bei der Ausführungsform gemäß Fig. 7 ist das als 4/2-Wegeventil ausgebildete Steuerventil 26 von Fig. 6 durch zwei als 3/2-Wegeventile ausgebildete Steuerventile 26 und 27 ersetzt. Diese Steuerventile 26 und 27 können als Sitzventile ausgebildet sein und somit eine minimale Leckage aufweisen. Eine Sicherheitsfunktion ist jedoch nur außerhalb der Steuerventile 26 und 27 realisierbar.

Um bei Verwendung nur einer Förderpumpe 12 bzw. einer Förderpumpenbaugruppe eine maximal mögliche Bandbreite der aktiven Regelung zu erreichen und die konstruktive Komplexität der Ventile auf ein Minimum zu reduzieren, können, wie in der Ausführungsform von Fig. 8 dargestellt, die beiden als 3/2-Wegeventile ausgebildeten Steuerventile 26 und 27 gemäß Fig. 7 durch insgesamt vier, als 2/2-Wegeventile ausgebildete Steuerventile 26, 27, 30 und 31 ersetzt werden.

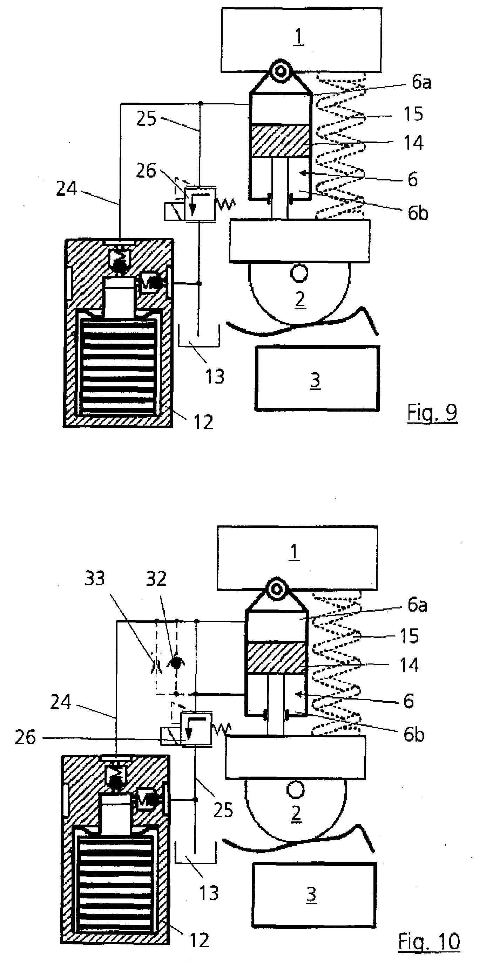

Die Figuren 9, 10 und 11 zeigen Ausführungsformen des Fahrwerkssystems, bei denen je Rad 2 lediglich eine Förderpumpe, nämlich die Förderpumpe 12, und ein Steuerventil, nämlich das Steuerventil 26, vorgesehen ist. Dadurch kann ein Kompromiss zwischen der maximal möglichen Bandbreite der aktiven Fahrwerksregelung und den Systemkosten gefunden werden, da in diesem Fall aktiv nur eine der Kammern 6a oder 6b geregelt wird.

Bei der Ausführungsform gemäß Fig. 9 ist in der von der Versorgungsleitung 24 abzweigenden Rücklaufleitung 25 von der Kammer 6a des Stellglieds 6 zu dem Tank 13 das in dieser Ausführungsform als Regelventil ausgebildete Steuerventil 26 vorgesehen. Das Steuerventil 26 kann auch als 2/2-Wege-Schaltventil mit integrierter Drossel, als Proportionalventil oder als Druckregelventil ausgebildet sein. Zwar ist auch hier die der Kammer 6a gegenüberliegende Kammer 6b vorgesehen, diese wird jedoch nicht mit Hydraulikflüssigkeit versorgt. Insoweit handelt es sich um eine einfach wirkende Zylinder-Kolben-Einheit bzw. einen Plunger.

Eine weitere Ausführungsform des Fahrwerkssystems ist in Fig. 10 dargestellt. Hierbei sind die beiden Kammern 6a und 6b des als Differential-Zylinder-Kolben-Einheit ausgebildeten Stellglieds 6 über ein Rückschlagventil 32 und/oder eine Drossel 33 miteinander verbunden. Durch den Einsatz der Drossel 33 kann bei einem Ausfall des Fahrwerkssystems auf sonstige Sicherheitsmaßnahmen verzichtet werden, da sich dasselbe wie ein passives Fahrwerkssystem verhält. Vorzugsweise wird jedoch nur entweder das Rückschlagventil 32 oder die Drossel 33 eingesetzt. Bei einem Differentialzylinder sind im Unterschied zu einem Gleichgangzylinder die beiden einander gegenüberliegenden Flächen des Kolbens unterschiedlich groß. Der Einsatz von Differential- statt Gleichgangzylindern erfolgt bei solchen langsam-aktiven Fahrwerken aus Gründen der Einfachheit des Systems.

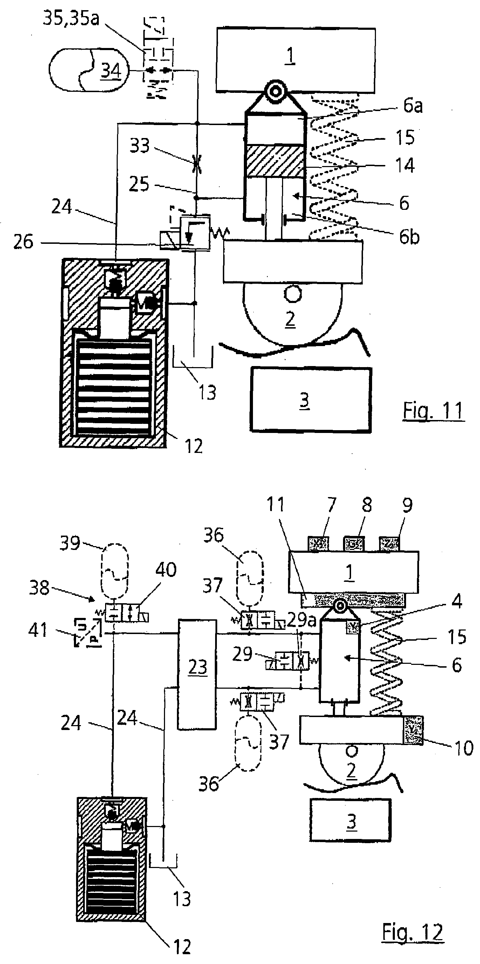

In einer in Fig. 11 dargestellten Ausführungsform des Fahrwerkssystems kann zusätzlich zu der Drossel 33 ein beispielsweise als Gasdruckspeicher ausgebildeter Druckspeicher 34 vorgesehen sein, der von der Versorgungsleitung 24 abzweigt. Eine solche hydropneumatische Ausführungsform des Fahrwerkssystems ist auch ohne Zufuhr von Hydraulikflüssigkeit durch die Förderpumpe 12 und ohne Abfuhr von Hydraulikflüssigkeit über das auch hier vorgesehene Steuerventil 26 in der Lage, das Rad 2 gegenüber der Karosserie 1 zu federn und kann in einem Notfall eingesetzt werden, um ein Verhärten des Fahrwerks zu verhindern. Darüber hinaus dient der Druckspeicher 34 auch dazu, die notwendige Dynamikanforderung der Steuerventileinrichtung 23 zu verringern und bei hochfrequenten, geringfügigeren Anregungen durch die Straße das Erfordernis des Zuschaltens der Förderpumpe 12 zu vermeiden. Eine Zufuhr von Hydraulikflüssigkeit durch die Förderpumpe 12 bzw. eine Abfuhr derselben durch das Steuerventil 26 ist nur erforderlich, wenn das Fahrwerkssystem erkennt, dass das Fahrzeugverhalten durch einen aktiven Eingriff verbessert werden kann. Auf diese Weise kann die Auslegung der Förderpumpe 12 hinsichtlich ihrer Fördermenge reduziert werden. Die konstante Drossel 33 sorgt in diesem Fall dafür, dass der Druckspeicher 34 als Federelement mit zusätzlichem Dämpfungseffekt für das Fahrwerkssystem wirken kann. In der zu dem Druckspeicher 34 führenden Leitung ist ein Schaltventil 35 mit einer variablen Drossel 35a vorgesehen, welche die Variabilitätsmöglichkeiten des Fahrwerkssystems erhöht und in ähnlicher Weise wie die Drossel 33 wirkt. Aus diesem Grund könnte entweder auf die Drossel 33 oder auf die Drossel 35a des Schaltventils 35 verzichtet werden. Prinzipiell ist sowohl eine konstante als auch eine variable, elektrisch verstellbare Drossel möglich.

Bei der Ausführungsform des Fahrwerkssystems von Fig. 12 sind verschiedene Maßnahmen dargestellt, die für einen Notfallbetrieb desselben eingesetzt werden können oder die eingesetzt werden können, um die notwendige Förderleistung der Förderpumpe 12 zu reduzieren. Diese Maßnahmen können alternativ oder gleichzeitig zum Einsatz kommen.

Für einen Notfallbetrieb ist zum einen das unter Bezugnahme auf Fig. 5 bereits beschriebene Sicherheitsventil 29 mit der Drossel 29a vorgesehen, zum anderen sind an einer oder an beiden Versorgungsleitungen 24 jeweilige Druckspeicher 36 über entsprechende Ventile 37 mit integrierter, konstanter oder verstellbarer Drossel angeschlossen, so dass die notwendige und wünschenswerte Nachgiebigkeit der Radaufhängung gegeben ist, da die Druckspeicher 36 eine federnde Beweglichkeit des Kolbens 14 des Stellglieds 6 sicherstellen. Im Notfall, also zum Beispiel beim Ausfall des elektrischen Steuergeräts 3, werden die beiden Kammern 6a und 6b durch die hydraulische Steuerventileinrichtung 23 gegenüber dem Tank 13 abgeschlossen. Die Kammern 6a und 6b können auch im Normalbetrieb mit den Druckspeichern 36 verbunden sein, da auch in einem solchen Fall, unabhängig davon, ob die Kammern 6a und 6b gemeinsam oder unabhängig voneinander nach außen abgeschlossen bzw. mit der Förderpumpe 12 oder dem Tank 13 verbunden werden, extreme Druckspitzen in den Kammern 6a und 6b auch dann vermieden werden können, wenn das Stellglied 6 durch starke Stoßkräfte mit großen Kraft- bzw. Weggradienten beaufschlagt wird und wenn eine schnelle Reaktion der Steuerventileinrichtung 23 von untergeordneter Bedeutung ist.

Zwischen der Förderpumpe 12 und der hydraulischen Steuerventileinrichtung 23 ist des weiteren ein Hochdruckspeichersystem 38 vorgesehen, welches einen Druckspeicher 39, ein Absperrventil 40 und einen Drucksensor 41 aufweist und welches bei hohem Leistungsbedarf zusätzliche Energie zur Verfügung stellen kann. Da solche Spitzenleistungen üblicherweise nur kurzzeitig benötigt werden, kann bei entsprechender Bemessung des Hochdruckspeichersystems 38 gewährleistet werden, dass die Förderpumpe 12 eine relativ geringe Förderleistung aufweisen muss. Zusätzlich sind in Fig. 12 der Weggeber 4, die Beschleunigungsgeber 7, 8, 9 und 10 sowie der Kraftgeber 11 dargestellt, die selbstverständlich auch bei allen anderen Ausführungsformen vorgesehen sein können.

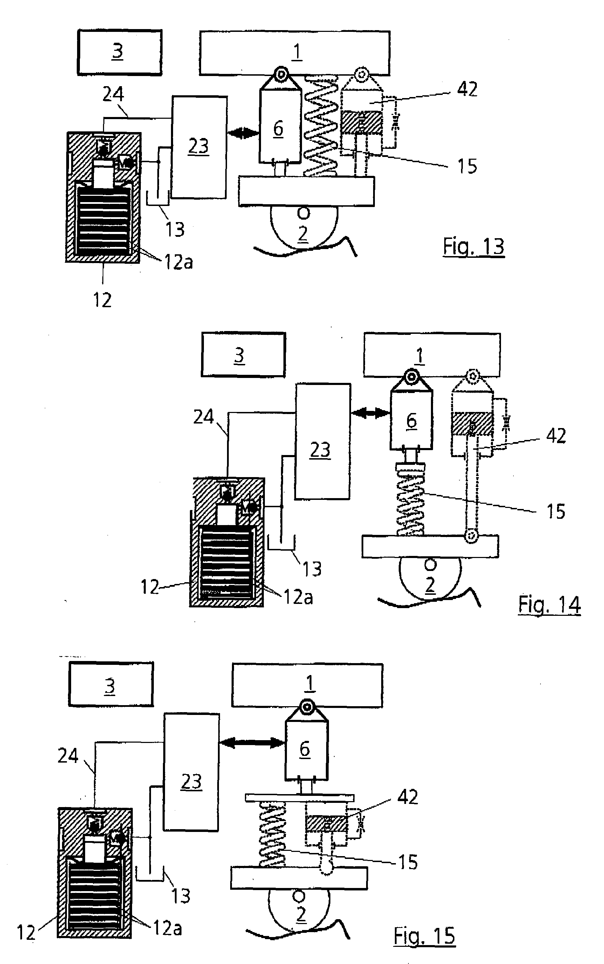

In den Figuren 13, 14 und 15 sind weitere Fahrwerkssysteme beschrieben, die mit sämtlichen oben beschriebenen Systemen kombiniert werden können. Das Stellglied 6 kann wiederum als Zylinder-Kolben-Einheit und dabei insbesondere als Gleichgangzylinder, doppelt wirkender Differentialzylinder, einfach wirkende Zylinder-Kolben-Einheit oder Drehzylinder ausgebildet sein. So ist bei diesen Ausführungsformen zusätzlich zu dem Stellglied 6 nicht nur das Federelement 15, sondern auch ein Stoßdämpfer 42 vorgesehen. Der Stoßdämpfer 42 kann als rein passives Dämpferelement, jedoch auch als semiaktiver Stoßdämpfer 42 ausgebildet sein. Dadurch lässt sich ein aktives Federungssystem mit einfach ausführbarer und zuverlässiger Regelung schaffen, da hierbei die Regelung schneller Radbewegungen unberücksichtigt bleiben kann. In erster Linie sollen durch eine Verstellung des Stellglieds 6 Bewegungen der Karosserie 1 beeinflusst werden, die relativ langsam sind, wohingegen die schnellen Bewegungen des Rades 2 im wesentlichen ausschließlich durch den Stoßdämpfer 42 beeinflusst werden. Durch das zusätzliche Vorsehen des Stoßdämpfers 42 werden vor allem die Anforderungen an die Dynamik der hydraulischen Steuerventileinrichtung 23 verringert.

Während bei der Ausführungsform gemäß Fig. 13 der Stoßdämpfer 42 parallel zu dem Federelement 15 und dem Stellglied 6 angeordnet ist, sind bei der Ausführungsform gemäß Fig. 14 der Stoßdämpfer 42 und das Federelement 15 parallel angeordnet und gemeinsam in Reihe zu dem Stellglied 6 geschaltet. Bei der Ausführungsform von Fig. 15 ist das Federelement 15 in Reihe zu dem Stellglied 6 angeordnet und diese beiden Elemente sind parallel zu dem Stoßdämpfer 42 angeordnet. Bei sämtlichen Ausführungsformen der Figuren 13, 14 und 15 ist selbstverständlich trotz des Vorhandenseins des Stoßdämpfers 42 und/oder des Federelements 15 sowie unabhängig von deren Anordnung das Stellglied 6 zwischen der Karosserie 1 und einem der Räder 2 angeordnet.

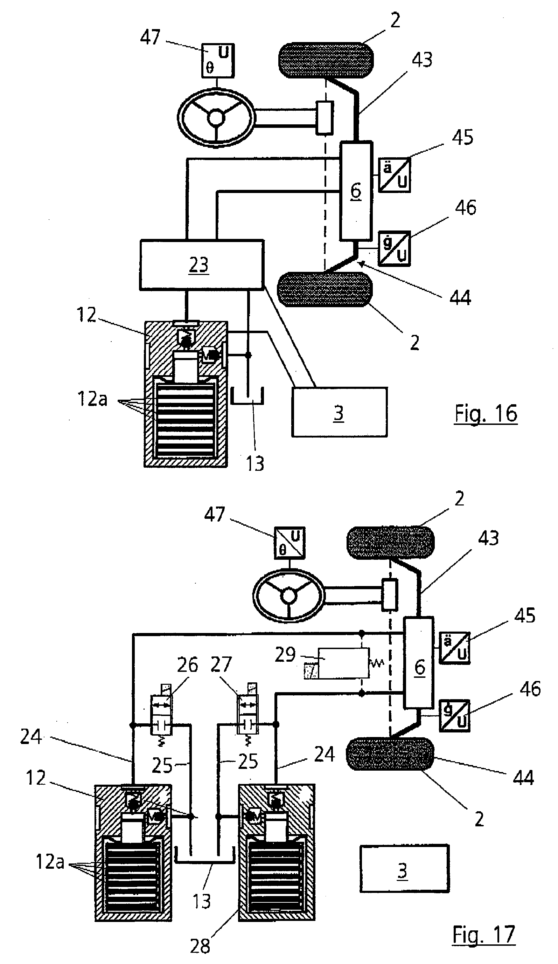

Bei der Ausführungsform gemäß Fig. 16 wird das insbesondere als hydraulischer Drehzylinder ausgebildete Stellglied 6 in einer horizontalen oder vertikalen Lage in einen Stabilisator 43 einer Vorder- und/oder Hinterachse 44 des Kraftfahrzeugs, also zwischen zwei Rädern 2, eingebaut, um in Fahrzuständen, in denen eine Stabilisierung der Fahrwerks notwendig ist, aktiv eine von passiven oder eventuell verstellbaren Aufhängungssystemen unabhängige Wankstabilisierungsfunktion durch eine Verspannung der beiden Hälften des Stabilisators 43 gegeneinander und in beiden Drehrichtungen zu schaffen. Auch für diese Wankstabilisierungsfunktion, mit der das Fahrverhalten des Kraftfahrzeugs beeinflusst werden kann, ist die Förderpumpe 12 für einen mit hoher Frequenz intermittierend arbeitenden Förderbetrieb ausgelegt, wodurch ähnliche Vorteile wie oben angegeben erzielt werden. Die aktive Funktion kann entweder in bereits vorhandene verstellbare bzw. aktive Fahrwerkssysteme oder in bereits vorhandene rein passive Systeme integriert sein. Die Integration des Stellglieds 6 in den Stabilisator 43 kann somit unabhängig von der Ausgestaltung der Radaufhängung erfolgen, d.h. sie ist sowohl bei einem passiven als auch bei jedem anderen Aufhängungssystem anwendbar. Der in der horizontalen oder vertikalen Lage eingebaute Stabilisator 43 wird im vorliegenden Fall ebenfalls als zu den Fahrwerkssystemen gehörig angesehen. Neben der Ausführung als Drehzylinder kann das Stellglied 6 auch als Differentialzylinder oder als Gleichgangzylinder ausgebildet sein und es kann auch in der vertikalen Position eingebaut sein. Die Stabilisatoren 43, die beispielsweise in der Mitte aufgetrennt und deren beiden Hälften durch das Stellglied 6 verbunden sind, können eine Linear- und/oder Drehbewegung ausführen, um den Fahrkomfort durch Verminderung der Wankneigung sowie das Fahrverhalten durch Änderung des Einlenkverhaltens zu beeinflussen. Zur Kompensation des Wankmoments bei einer Kurvenfahrt wird in Abhängigkeit von der auftretenden Querbeschleunigung an dem das Stellglied 6 bildenden hydraulischen Zylinder beispielsweise ein Torsionsmoment erzeugt, das eine Abstützung der Karosserie 1 mit Hilfe der Stabilisatoren 43 bewirkt.

Zur Ermittlung des Fahrzustandes können zum Beispiel ein Querbeschleunigungssensor 45, ein nicht dargestelltes Drosselklappenpotentiometer, ein Fahrgeschwindigkeitssensor 46 und/oder ein Lenkwinkelsensor 47 eingesetzt werden. Die hydraulische Steuerventileinrichtung 23 ist auch bei dieser Ausführungsform vorgesehen und mit dem Steuergerät 3 verbunden.

Fig. 17 zeigt eine weitere Ausführungsform der Integration des Stellglieds 6 in den Stabilisator 43 einer oder beider Achsen des Kraftfahrzeugs. Hierbei weist die hydraulische Steuerventileinrichtung 23 ähnlich zu der Ausführungsform der Figuren 4 und 5 die beiden Steuerventile 26 und 27 auf, die in jeweiligen Rücklaufleitungen 25 angeordnet sind. Die beiden zu dem Stellglied 6 führenden Versorgungsleitungen 24 sind, ähnlich zu der Ausführungsform von Fig. 5, über das Sicherheitsventil 29 miteinander verbunden. Im Gegensatz zu der in Fig. 16 dargestellten Ausführungsform ist hier zusätzlich zu der ersten Förderpumpe 12 die zweite Förderpumpe 28 vorgesehen. Beim Einsatz zweier Förderpumpen 12 und 28 könnte neben den dargestellten Schaltventilen 26 und 27 auch ein 4/3-Proportionalwegeventil in Ventilschieberbauart, zwei 3/2-Proportionalwegeventile in Ventilsitzbauart oder vier 2/2-Proportionalwegeventile in Ventilsitzbauart zum Einsatz kommen, die jeweils mit Schalt- und/oder Regelfunktion, beispielsweise einer Druckregelung, ausgestattet sein könnten.

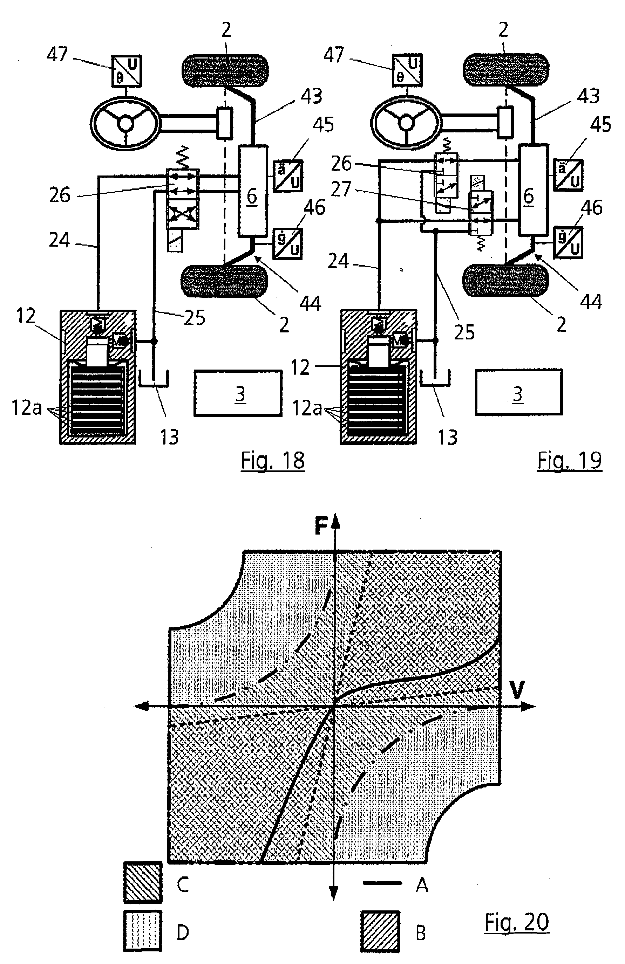

Eine weitere Ausführungsform des Fahrwerkssystems mit der Integration des Stellglieds 6 in den Stabilisator 43 ist in Fig. 18 dargestellt. Hierbei ist lediglich die Förderpumpe 12 vorgesehen und mit einem als 4/2-Wegeventil ausgebildeten Steuerventil 26 mit dem Stellglied 6 verbunden. Diese Ausführungsform ist somit hinsichtlich der Ausgestaltung der hydraulischen Steuerventileinrichtung 23 ähnlich zu derjenigen, die in Fig. 6 dargestellt ist.

Bei der Ausführungsform gemäß Fig. 19 sind statt des 4/2-Wegeventils zwei 3/2-Wegeventile in Ventilsitzbauart als Schaltventile 26 und 27 vorgesehen, sodass eine ähnliche Ausführungsform wie in Fig. 7 vorliegt. Beim Vorhandensein lediglich einer Förderpumpe 12 kann zusätzlich auch eine Ausführungsform mit einem 4/3-Proportionalwegeventil in Ventilschieberbauart oder vier 2/2-Proportionalwegeventilen in Ventilsitzbauart, vorzugsweise mit Schalt- und/oder Regelfunktionen, wie beispielsweise einer Druckregelung, vorgesehen sein.

Aus Sicherheitsgründen können zusätzliche, nicht dargestellte Elektroventile vorgesehen sein, um bei einem Systemausfall während einer Kurvenfahrt eine Schrägstellung des Fahrzeugaufbaus bei Geradeausfahrt zu vermeiden, da die gegeneinander blockierten Hälften des Stabilisators 43 in einem solchen Fall wie passive Drehstabfedern wirken.

Jede der unter Bezugnahme auf die Figuren 3-15 beschriebene Ausführungsform des Fahrwerkssystems und insbesondere der hydraulischen Steuerventileinrichtung 23 kann auch bei den Ausführungsform gemäß der Figuren 16 - 19 Verwendung finden, falls nicht besondere Gründe gegen einen solchen Einsatz sprechen.

Fig. 20 zeigt ein Diagramm, in dem verschiedene Kraft-Geschwindigkeits-Kennlinien angegeben sind. Hierbei stellt die mit "A" bezeichnete Kennlinie den Verlauf der Kraft über der Geschwindigkeit bei einem passiven Fahrwerkssystem dar. Das mit "B" bezeichnete Kennfeld stellt die Möglichkeiten eines semiaktiven Fahrwerkssystems dar, das mit "C" diejenigen eines langsam-aktiven Fahrwerkssystems und das mit "D" bezeichnete das Kennfeld eines voll-aktiven Fahrwerkssystems.

## Patentansprüche

1. Aktives Fahrwerkssystem für ein Kraftfahrzeug, welches wenigstens ein zwischen wenigstens einem Rad und der Karosserie des Kraftfahrzeugs oder zwischen zwei Rädern angeordnetes hydraulisches Stellglied, wenigstens eine das wenigstens eine Stellglied mit einer Hydraulikflüssigkeit versorgende Förderpumpe und eine Steuerventileinrichtung zur Steuerung des Drucks innerhalb des Stellglieds aufweist,
**dadurch gekennzeichnet, dass**
die wenigstens eine Förderpumpe (12,28) unabhängig von einer Antriebsquelle (17) des Kraftfahrzeugs antreibbar und für einen mit hoher Frequenz intermittierend arbeitenden Förderbetrieb ausgelegt ist.

2. Fahrwerkssystem nach Anspruch 1,
**dadurch gekennzeichnet, dass**
die Förderpumpe (12,28) mit piezoelektrischen, magnetostriktiven und/oder elektrochemischen Aktuatoren (12a,28a) als Förderelementen ausgebildet ist.

3. Fahrwerkssystem nach Anspruch 1 oder 2,
**dadurch gekennzeichnet, dass**
für jedes Stellglied (6) wenigstens eine Förderpumpe (12,28) vorgesehen ist.

4. Fahrwerkssystem nach Anspruch 1, 2 oder 3,
**dadurch gekennzeichnet, dass**
die wenigstens eine Förderpumpe (12,28) und die wenigstens eine hydraulische Steuerventileinrichtung (23) modulartig mit dem Rad (2) verbunden sind.

5. Fahrwerkssystem nach einem der Ansprüche 1 bis 4,
**dadurch gekennzeichnet, dass**
das Stellglied (6) als hydraulische Zylinder-Kolben-Einheit mit wenigstens einem Zylinder und wenigstens einem Kolben (14) ausgebildet ist.

6. Fahrwerkssystem nach Anspruch 5,
**dadurch gekennzeichnet, dass**
die Zylinder-Kolben-Einheit als Gleichgangzylinder, doppelt wirkender Differentialzylinder, einfach wirkende Zylinder-Kolben-Einheit oder Drehzylinder ausgebildet ist.

7. Fahrwerkssystem nach Anspruch 5 oder 6,
**dadurch gekennzeichnet, dass**
die hydraulische Zylinder-Kolben-Einheit zwei beiderseits des Kolbens (14) angeordnete Kammern (6a,6b) aufweist.

8. Fahrwerkssystem nach Anspruch 7,
**dadurch gekennzeichnet, dass**
die Förderpumpe (12,28) mit beiden Kammern (6a,6b) verbunden ist.

9. Fahrwerkssystem nach einem der Ansprüche 5 bis 7,
**dadurch gekennzeichnet, dass**
die Förderpumpe (12,28) nur mit einer Kammer (6a,6b) verbunden ist.

10. Fahrwerkssystem nach Anspruch 7,
**dadurch gekennzeichnet, dass**
für jedes Stellglied (6) zwei Förderpumpen (12,28) vorgesehen sind, von denen jede zur Steuerung des Drucks in einer der Kammern (6a,6b) vorgesehen ist.

11. Fahrwerkssystem nach einem der Ansprüche 5 bis 9,
**dadurch gekennzeichnet, dass**
für jedes Stellglied (6) nur eine Förderpumpe (12,28) vorgesehen ist.

12. Fahrwerkssystem nach Anspruch 11,
**dadurch gekennzeichnet, dass**
die Förderpumpe (12,28) zur Steuerung des Drucks in beiden Kammern (6a,6b) vorgesehen ist.

13. Fahrwerkssystem nach Anspruch 11,
**dadurch gekennzeichnet, dass**
die Förderpumpe (12,28) zur Steuerung des Drucks in nur einer der Kammern (6a,6b) vorgesehen ist.

14. Fahrwerkssystem nach einem der Ansprüche 1 bis 13,
**dadurch gekennzeichnet, dass**
die hydraulische Steuerventileinrichtung (23) wenigstens ein Steuerventil (26,27) aufweist.

15. Fahrwerkssystem nach Anspruch 14,
**dadurch gekennzeichnet, dass**
mit dem wenigstens einen Steuerventil (26,27) die Zufuhr von Hydraulikflüssigkeit zu dem Stellglied (6) regelbar ist.

16. Fahrwerkssystem nach Anspruch 14 oder 15,
**dadurch gekennzeichnet, dass**
mit dem wenigstens einen Steuerventil (26,27) die Abfuhr von Hydraulikflüssigkeit zu dem Stellglied (6) regelbar ist.

17. Fahrwerkssystem nach einem der Ansprüche 7 bis 16,
**dadurch gekennzeichnet, dass**
ein Sicherheitsventil (29) zum Verbinden der beiden Kammern (6a,6b) des Stellglieds (6) vorgesehen ist.

18. Fahrwerkssystem nach einem der Ansprüche 7 bis 17,
**dadurch gekennzeichnet, dass**
wenigstens eine der beiden Kammern (6a,6b) mit einem Druckspeicher (34,36) verbunden ist.

19. Fahrwerkssystem nach Anspruch 18,
**dadurch gekennzeichnet, dass**
zwischen dem wenigstens einen Druckspeicher (34,36) und dem Stellglied (6) wenigstens eine Drossel (33,35a) vorgesehen ist.

20. Fahrwerkssystem nach einem der Ansprüche 1 bis 19,
**dadurch gekennzeichnet, dass**
ein Hochdruckspeichersystem (38) zur Unterstützung des Förderbetriebs der Förderpumpe (12) vorgesehen ist.

21. Fahrwerkssystem nach einem der Ansprüche 1 bis 20,
**dadurch gekennzeichnet, dass**
das Stellglied (6) in einen Stabilisator (43) integrierbar ist.
